(19) Europäisches Patentamt
European Patent Office
Office européen des brevets

(11) **EP 2 124 369 A1**

(12) **EUROPEAN PATENT APPLICATION**
published in accordance with Art. 153(4) EPC

(43) Date of publication:
**25.11.2009 Bulletin 2009/48**

(51) Int Cl.:
*H04J 11/00* (2006.01)     *H04B 7/26* (2006.01)
*H04J 1/00* (2006.01)     *H04Q 7/34* (0000.00)
*H04Q 7/36* (0000.00)

(21) Application number: **07860193.7**

(22) Date of filing: **26.12.2007**

(86) International application number:
**PCT/JP2007/074964**

(87) International publication number:
**WO 2008/087838 (24.07.2008 Gazette 2008/30)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **19.01.2007 JP 2007010860**

(71) Applicant: **NTT DoCoMo, Inc.**
**Chiyoda-ku**
**Tokyo 100-6150 (JP)**

(72) Inventors:
• **NISHIKAWA, Daisuke**
  **Tokyo 100-6150 (JP)**
• **ISHII, Hiroyuki**
  **Tokyo 100-6150 (JP)**
• **NAKAMURA, Takehiro**
  **Tokyo 100-6150 (JP)**

(74) Representative: **HOFFMANN EITLE**
**Patent- und Rechtsanwälte**
**Arabellastrasse 4**
**81925 München (DE)**

(54) **BASE STATION DEVICE AND COMMUNICATION CONTROL METHOD**

(57)     The object is achieved by a base station apparatus performing communications with mobile stations transmitting an uplink signal based on a frequency division multiple access scheme, the base station apparatus being provided with a unit for calculating an uplink interference wave level IoT and receive quality SIR of a pilot signal based on an uplink reference signal.

FIG.7

**Description**

TECHNICAL FIELD

The present invention generally relates to the LTE (Long Term Evolution) system. More particularly, the present invention relates to a base station apparatus and a communication control method.

BACKGROUND ART

3GPP that is the standardization organization for W-CDMA is studying LTE (Long Term Evolution) as a communication scheme that becomes a successor of W-CDMA and HSDPA. In the LTE, as radio access schemes, OFDM (Orthogonal Frequency Division Multiplexing) is studied for the downlink, and SC-FDMA (Single-Carrier Frequency Division Multiple Access) is studies for the uplink (refer to non-patent document 1, for example).

The OFDM is a scheme in which a frequency band is divided into a plurality of narrow frequency bands (subcarriers) to perform transmission by carrying data on each frequency band. By arranging the subcarriers densely on the frequency without interfering with each other while a part of them overlaps, high-speed transmission is realized and use efficiency of frequencies can be improved.

The SC-FDMA is a transmission scheme in which interference between terminals can be decreased by dividing a frequency band and by using frequency bands different among a plurality of terminals for transmission. Since SC-FDMA has characteristics of reduction of variation of transmission power, low power consumption and wide coverage for terminals can be realized.

Generally, in the uplink of a radio communication system, adaptive modulation and coding (AMC) and transmit power control (TPC) and the like are performed by using uplink interference wave level (IoT: Interference over Thermal) of the uplink and receive quality of a pilot signal (SIR: Signal-to-Noise power Ratio) and the like, so that uplink capacity can be increased.

For example, in W-CDMA, the base station apparatus measures SIR of a pilot signal mapped to a dedicated physical control channel (DPCCH) and measures power of the whole system band (RTWP : Received Total Wideband Power), so that the base station apparatus performs AMC and TPC using the SIR of DPCCH and RTWP (refer to non-patent document 2 and non-patent document 3, for example).

Since the DPCCH is continuously transmitted while communications between the base station apparatus and the mobile station are being performed, the base station apparatus continuously receives DPCCH from the mobile station so that the base station apparatus can perform control based on the SIR. In addition, in the system of W-CDMA, uplink channels are not orthogonal with each other. Thus, RTWP which is the received power of the whole system band and the uplink interference wave level IoT are almost equivalent. That is, RTWP was used as the uplink interference wave level.

In the uplink of the LTE system, a reference signal for data demodulation (demodulation reference signal) and a sounding reference signal are transmitted as pilot signals, wherein the sounding reference signal is used for determining a transmission format of a physical uplink shared channel such as scheduling, uplink AMC and TPC and the like. In addition, in the uplink of LTE, application of the SC-FDMA scheme is being considered, and in this case, uplink channels are orthogonal with each other.

[Non-patent document 1] 3GPP TR 25.814 (V7.1.0), "Physical Layer Aspects for Evolved UTRA," September 2006
[Non-patent document 2] 3GPP TS 25.214 (V.7.3.0), "Physical layer procedures," December 2006
[Non-patent document 3] 3GPP TS 25.215 (V.7.1.0), "Physical layer - Measurements (FDD)," September 2006

DISCLOSURE OF THE INVENTION

PROBLEM TO BE SOLVED BY THE INVENTION

However, the above-mentioned background arts include following problems.

That is, in LTE, different timeslots are used for the sounding reference signal and the data part, and the data part is transmitted like a burst in both of time direction and frequency direction. Thus, there is a problem in that the measurement method for SIR used in the conventional W-CDMA cannot be used. In addition, since the uplink in LTE is an orthogonal system, there is a problem in that IoT cannot be measured only by measuring received power of the uplink.

The present invention is conceived for solving the above-mentioned problems of the conventional technique, and the object is to provide a base station apparatus and a communication control method that can calculate IoT and SIR accurately in the uplink of LTE.

In addition, another object of the present invention is to provide a base station apparatus and a communication control method that can properly perform AMC using the accurately calculated IoT and SIR.

MEANS FOR SOLVING THE PROBLEM

In order to overcome the above problem, one aspect of the present invention relates to a base station apparatus performing communications with a plurality of mobile stations, including:

a transmission resource assignment unit configured to assign uplink transmission resources to the mobile stations; and
an interference wave level measurement unit configured to measure an uplink interference wave level based on a first signal transmitted based on the transmission resources by the mobile stations.

According to the aspect, it becomes possible to measure the interference wave level accurately.
In order to overcome the above problem, another aspect of the present invention relates to a base station apparatus performing communications with a plurality of mobile stations, wherein the mobile stations transmit a first signal using a first time slot, transmit a second signal using a second time slot, and transmit a third signal using the first time slot,
the base station apparatus including:

a transmission resource assignment unit configured to assign uplink transmission resources to the mobile stations;
an interference wave level measurement unit configured to measure an uplink interference wave level based on the first signal transmitted based on the transmission resources by the mobile stations;
a signal power measurement unit configured to measure second signal power based on the second signal; and
a transmission format determination unit configured to determine a transmission format of the third signal based on the uplink interference wave level, the second signal power, a power offset, and the uplink transmission resources.

According to the aspect, it becomes possible to determine the transmission format of the third signal accurately.
An aspect of the present invention relates to a communication control method in a base station apparatus performing communications with a plurality of mobile stations, wherein the mobile stations transmit a first signal using a first time slot, transmit a second signal using a second time slot, and transmit a third signal using the first time slot,
the communication control method including:

a first step of assigning uplink transmission resources to the mobile stations;
a second step of measuring an uplink interference wave level based on a first signal transmitted based on the transmission resources by the mobile stations;
a third step of measuring second signal power based on the second signal; and
a fourth step of determining a transmission format of the third signal based on the uplink interference wave level, the second signal power, a power offset, and the uplink transmission resources.

According to the aspect, it becomes possible to determine the transmission format of the third signal accurately.

EFFECT OF THE INVENTION

According to an embodiment of the present invention, a base station apparatus and a communication control method that can calculate IoT and SIR accurately in the uplink of LTE can be realized.
In addition, according to an embodiment of the present invention, a base station apparatus and a communication control method that can properly perform AMC using the accurately calculated IoT and SIR can be realized.

BRIEF DESCRIPTION OF THE DRAWINGS

Fig. 1 is a block diagram showing a configuration of a radio communication system according to an embodiment according to the present invention;
Fig. 2 is a schematic diagram showing a configuration of a subframe and slots according to an embodiment of the present invention;
Fig. 3 is a schematic diagram showing a configuration of a subframe and slots according to an embodiment of the present invention;
Fig. 4 is a partial block diagram showing a base station apparatus according to an embodiment according to the present invention;

Fig. 5 is a block diagram showing a baseband unit of a base station apparatus according to an embodiment according to the present invention;

Fig. 6 is a schematic diagram showing presence or absence of data transmission according to an embodiment of the present invention;

Fig. 7 is a flowchart showing a communication control method according to an embodiment of the present invention; and

Fig. 8 is a flowchart showing a communication control method according to an embodiment of the present invention.

Description of reference signs

| $100_1$, $100_2$, $100_3$, $100_n$ | mobile station |
| 200 | base station apparatus |
| 202 | transmit and receive antenna |
| 204 | amplifier unit |
| 206 | transmit and receive unit |
| 208 | baseband processing unit |
| 2081 | layer 1 processing unit |
| 2082 | MAC processing unit |
| 2083 | RLC processing unit |
| 2084 | interference measurement unit |
| 210 | call processing unit |
| 212 | transmission line interface |
| 300 | access gateway apparatus |
| 400 | core network |
| 1000 | radio communication system |

PREFERRED EMBODIMENTS FOR CARRYING OUT THE INVENTION

Next, preferred embodiments for carrying out the invention are described based on the following examples with reference to figures.

In all figures for explaining the embodiments, same reference signs are used for parts having same functions, and repeated description is not provided.

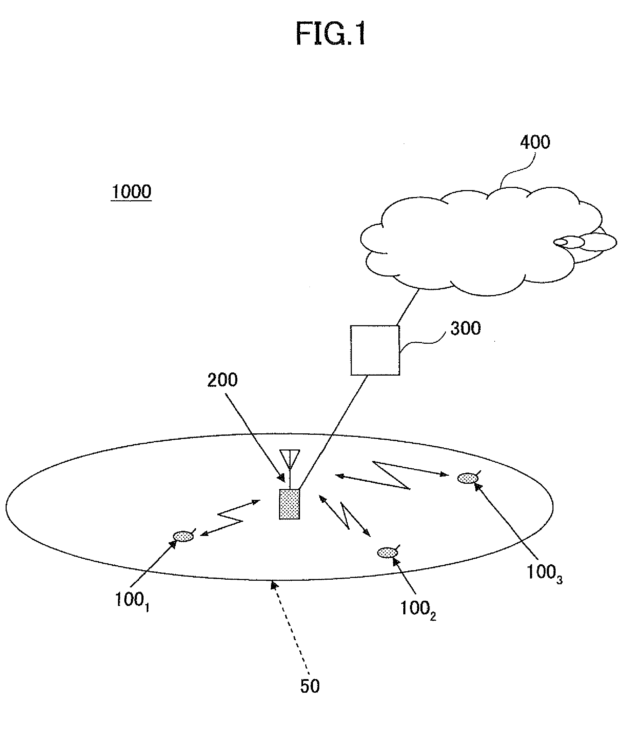

A radio communication system to which the base station apparatus of an embodiment of the present invention is applied is described with reference to Fig.1.

The radio communication system 1000 is a system to which Evolved UTRA and UTRAN (another name : LTE (Long Term Evolution) or Super 3G) is applied. The radio communication system 1000 includes a base station apparatus (eNB:eNode B) 200 and a plurality of mobile stations (UE:User Equipment) $100_n$ ($100_1$, $100_2$, $100_3$, ··· $100_n$, n is an integer satisfying n>0). The base station apparatus 200 is connected to an upper station which is an access gateway apparatus 300, for example. The access gateway apparatus 300 is connected to a core network 400. The mobile station $100_n$ communicates with the base station apparatus 200 based on Evolved UTRA and UTRAN in the cell 50.

In the following, since mobile stations $100_n$ ($100_1$, $100_2$, $100_3$, ··· $100_n$) include the same configurations, functions and states, a mobile station $100_n$ is described in the following unless otherwise mentioned.

For the radio communication system 1000, OFDM (Orthogonal Frequency Division Multiplexing) is applied for downlink, and SC-FDMA (Single Carrier - Frequency Division Multiple Access) is applied for uplink. As mentioned above, OFDM is a scheme in which a frequency band is divided into a plurality of narrow frequency bands (subcarriers), and data is carried and transmitted on each frequency band. SC-FDMA is a transmission scheme that can reduce interference among terminals by dividing frequency band and transmitting signals using frequency bands different among a plurality of terminals.

In the following, communication channels in LTE are described.

In the downlink, a physical downlink shared channel (PDSCH) that is shared by each mobile station $100_n$ and a LTE downlink control channel (PDCCH: physical downlink control channel) are used. In the downlink, the LTE downlink control channel transmits user information and transport format information that are mapped to the physical downlink shared channel, user information and transport format information that are mapped to a physical uplink shared channel, and transmission confirmation information of the physical uplink shared channel. User data is transmitted by the physical downlink shared channel.

In the uplink, a physical uplink shared channel (PUSCH) that is shared by each mobile station $100_n$ and a LTE

uplink control channel (PUCCH: physical uplink control channel) are used. There are two types of uplink control channels that are a channel which is time-multiplexed with the physical uplink shared channel and a channel which is frequency-multiplexed with the physical uplink shared channel.

In the uplink, the LTE uplink control channel transmits downlink quality information (CQI: Channel Quality Indicator), and transmission confirmation information of the physical downlink shared channel (HARQ ACK information), wherein downlink quality information is used for scheduling, adaptive modulation and coding (AMC), and transmit power control (TPC) in the physical downlink shared channel. In addition, user data is transmitted by the physical uplink shared channel.

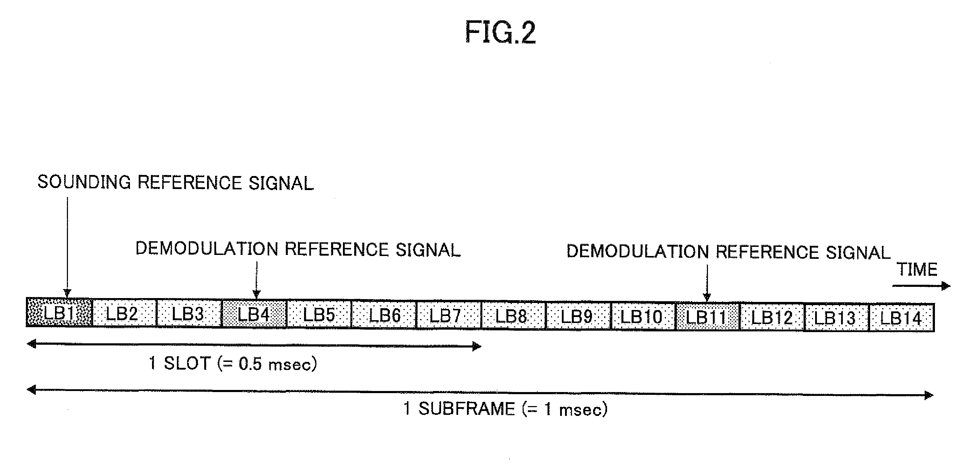

In the uplink transmission, it is considered to use seven long blocks (LBs) per one slot. One subframe is formed by two slots. That is, as shown in Fig.2, one subframe is formed by fourteen long blocks. The demodulation reference signal for data demodulation is mapped to two long blocks in the fourteen long blocks.

In one long block other than the long blocks to which the demodulation reference signal is mapped, the sounding reference signal is transmitted that is used for scheduling, and for determining a transmission format of the physical uplink shared channel such as AMC and TPC of the uplink. However, the sounding reference signal is not necessarily mapped in every subframe. In the long block by which the sounding reference signal is transmitted, sounding reference signals from a plurality of mobile stations are multiplexed by code division multiplexing (CDM).

The demodulation reference signal is mapped to the fourth long block and the eleventh long block in one subframe, for example. The sounding reference signal is mapped to the first long block in one subframe, for example.

The long block is also called as a SC-FDMA symbol.

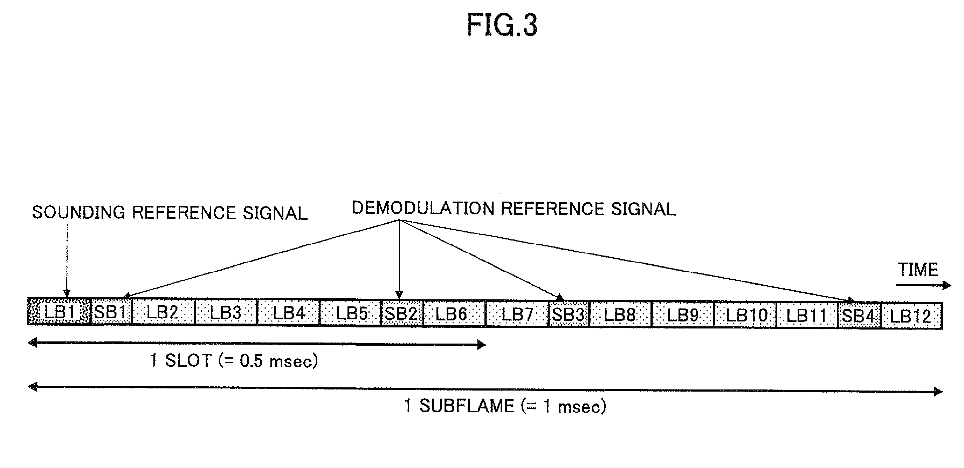

Alternatively, short blocks (SB) and six long blocks may be used per slot as a transmission format in the uplink. One subframe is formed by two slots. That is, as shown in Fig.3, one subframe includes four short blocks and twelve long blocks. The sounding reference signal is mapped to one long block in the twelve long blocks. The sounding reference signal is not necessarily mapped in every subframe.

Sounding reference signals from a plurality of mobile stations are multiplexed by CDM in the long block by which the sounding reference signal is transmitted. The four short blocks are used for transmitting the demodulation reference signal. The demodulation reference signal is mapped to four short blocks in one subframe, for example. The sounding reference signal is mapped to the first long block in one subframe, for example.

In the uplink, each mobile station $100_n$ performs data transmission in units of RB (Resource Block) in the frequency direction, and in units of subframes in the time direction. In LTE, 1RB corresponds to 180kHz.

In addition, in the uplink, each mobile station $100_n$ transmits the sounding reference signal over one RB or over a plurality of RBs.

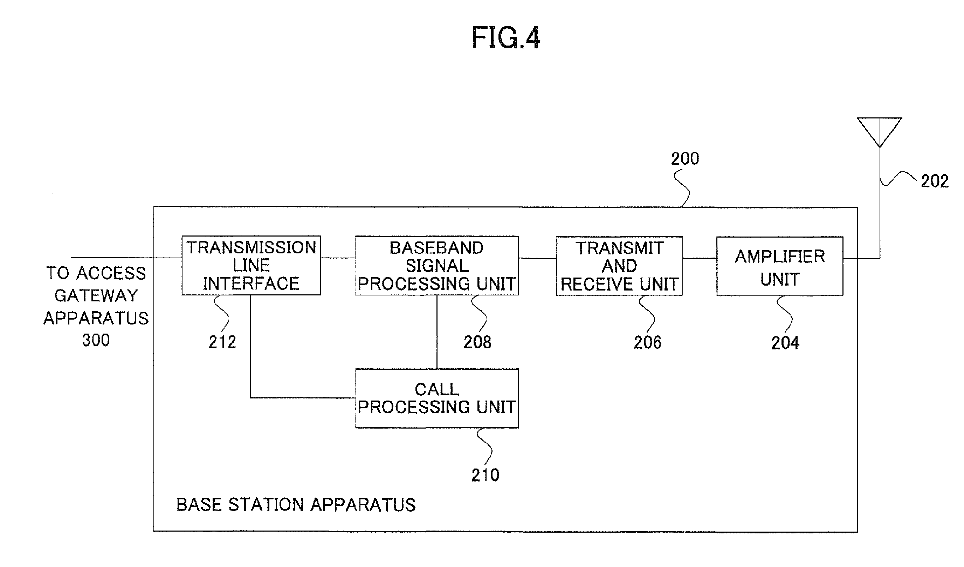

Next, the base station apparatus 200 of an embodiment of the present invention is described with reference to Fig.4.

The base station apparatus 200 of the present embodiment includes a transmit and receive antenna 202, an amplification unit 204, a transmit and receive unit 206, a baseband signal processing unit 208, a call processing unit 210, and a transmission line interface 212.

Packet data to be transmitted from the base station apparatus 200 to the mobile station $100_n$ by the downlink is input to the baseband signal processing unit 208 via the transmission line interface 212 from an upper station of the base station apparatus 200, that is, from the access gateway apparatus 300, for example.

The baseband signal processing unit 208 performs packet data dividing and combining, RLC (Radio Link Control) layer transmission processing such as RLC (Radio Link Control) retransmission control, MAC (Medium Access Control) retransmission control which is transmission processing of HARQ (Hybrid Automatic Repeat reQuest), for example, and performs scheduling, transmission format selection, channel coding, inverse fast Fourier transform processing. Then, the processed data is transferred to the transmit and receive unit 206.

The transmit and receive unit 206 performs frequency conversion processing for converting the baseband signal output from the baseband signal processing unit 208 into a radio frequency band. After that, the signal is amplified by the amplifying unit 204, and is transmitted from the transmit and receive antenna 202.

On the other hand, as to data to be transmitted from the mobile station $100_n$ to the base station apparatus 200 by the uplink, the radio frequency signal received by the transmit and receive antenna 202 is amplified by the amplification unit 204, and is frequency-converted in the transmit and receive unit 206 into a baseband signal, and the baseband signal is input to the baseband signal processing unit 208.

The baseband signal processing unit 208 performs, on the input baseband signal, fast Fourier transform (FFT) processing, error correction decoding, reception processing of MAC retransmission control, and reception processing of RLC layer. Then, the processed signal is transferred to the access gateway apparatus 300 via the transmission line interface 212.

The call processing unit 210 performs state management and resource assignment of the base station apparatus 200.

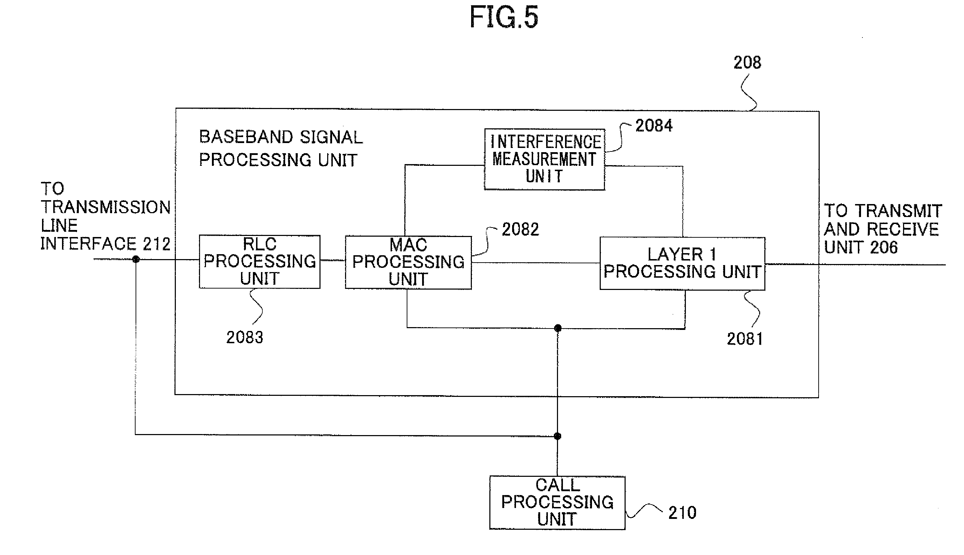

Next, the configuration of the baseband signal processing unit 208 is described with reference to Fig.5.

The baseband signal processing unit 208 includes a layer 1 processing unit 2081, a MAC processing unit 2082, a RLC processing unit 2083, and an interference measurement unit 2084.

The layer 1 processing unit 2081, the MAC processing unit 2082, and the interference measurement unit 2084 in the baseband signal processing unit 208 are connected with each other.

The layer 1 processing unit 2081 performs channel coding and IFFT processing for data transmitted by the downlink, and performs channel decoding and FFT processing for data transmitted in the uplink.

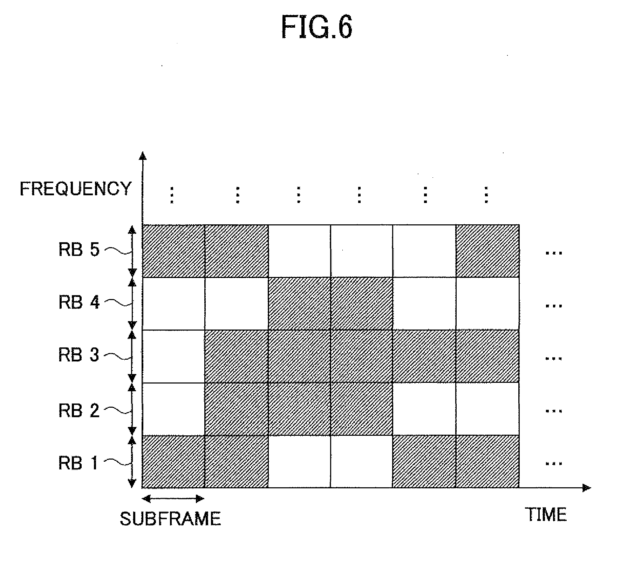

As shown in Fig.6, in the uplink of the LTE system, resource blocks (RB), subframes and transmission power and the like are assigned to each mobile station $100_n$ as transmission resources. The RB (resource block) is a unit of assignment of frequency resources in LTE, and 1 RB corresponds to 180kHz. In addition, as shown in the example of Fig.6, transmission resources that are not assigned to any mobile station $100_n$ may exist according to assignment.

The MAC processing unit 2082 performs transmission resource assignment control for PUSCH that is an uplink shared channel. Information set by the assignment control (to be referred to as assignment information, hereinafter) is assignment information in the time direction and assignment information in the frequency direction, which are a subframe number and a RB number by which data is transmitted, for example. The assignment information is sent from the MAC processing unit 2082 to the layer 1 processing unit 2081. The assignment information may include transmission power of the mobile station.

The layer 1 processing unit 2081 identifies the assignment information, that is, identifies a RB number and a subframe number by which data transmission is performed, and reports a DM RS (Demodulation Reference Signal) in the combination of the RB and the subframe by which data transmission is performed to the interference measurement unit 2084.

The interference measurement unit 2084 measures interference level using the DM RS.

On the other hand, as to a combination of RB and subframe by which data transmission is not performed, DM RS is not reported to the interference measurement unit 2084 so that measurement of interference level is not performed.

As the interference level (represented as I), interference power ($I_D$) obtained from dispersion of DM RS may be used as shown in the following equation (1).

$$I = I_D \quad \cdots \quad (1)$$

In addition, as the interference level, as shown in the following equation (2), a value obtained by subtracting signal power ($S_D$) of the DM RS relating to the RB from received total RB power (RTRP) including thermal noise on the RB and noise of the receiver may be used.

$$I = RTRP - S_D \quad \cdots \quad (2)$$

The interference measurement unit 2084 calculates an average of interference levels of a plurality of past subframes, including the present subframe, by which data transmission has been performed, so as to calculate IoT of the RB as shown in the following equation (3). The average of the interference levels is represented as $\widetilde{I}$. N in the equation (3) indicates noise power level.

$$IoT = (\widetilde{I} + N) / N \quad \cdots (3)$$

The averaging period for obtaining $\widetilde{I}$ can be set as a parameter. In addition, the number of past subframes to be referred to is limited such that interference levels of subframes by which data transmission has been performed are used for averaging. For example, the interference measurement unit 2084 only refers to past 100 subframes, and, when data transmission has been performed in 90 subframes of the 100 subframes, the interference measurement unit 2084 averages interference levels of the 90 subframes.

The averaging may be equal averaging without weighting, or may be averaging with weighting such that the older the subframe is, the smaller the effect is.

In addition, an averaging value for a plurality of RBs may be used instead of averaging for one RB.

The IoT may be a value common to a cell. That is, the IoT may be calculated from data of a plurality of mobile stations $100_n$.

The interference measurement unit 2084 measures signal power ($S_S$) of the sounding RS, and calculates SIR of each mobile station $100_n$ as shown in the following equation (4).

$$SIR = S_S \; / \; \widetilde{I} \quad \cdots (4)$$

The SIR may be also calculated by the following equation (5).

$$SIR = S_S \; / \; IoT \quad \cdots (5)$$

Therefore, the SIR is a value determined based on the signal power measured by the sounding RS and the interference level measured by the DM RS, wherein timeslots between the sounding RS and the DM RS are different with each other as shown in Fig.2 or Fig.3.

The interference measurement unit 2084 reports the IoT and the SIR to the layer 1 processing unit 2081 and the MAC processing unit 2082.

The MAC processing unit 2082 performs MAC retransmission control of downlink data such as HARQ transmission process, and performs scheduling, selection of transmission formats and the like.

The MAC processing unit 2082 performs receiving process for MAC retransmission control of uplink data.

In addition, the MAC processing unit 2082 sets a transmission format for uplink data based on the IoT and the SIR reported from the interference measurement unit 2084, that is, the MAC processing unit 2082 sets at least one of frequency resource, subframe and transmission power, for example. Foe example, AMC selection, that is, selection of modulation scheme and/or data size, and transmission power control (TPC) are performed.

That is, the MAC processing unit 2082 determines a transmission format of the physical uplink shared channel as the third signal based on the uplink interference wave level of the uplink, signal power of the sounding RS, power offset, and uplink transmission resources. The power offset is determined by the signal power of the sounding RS and a predetermined threshold. The predetermined threshold is determined based on at least one of path loss and UE Power Headroom. The UE Power Headroom is a ratio between the signal power of the sounding RS and the maximum transmission power in the uplink.

The RLC processing unit 2083 performs transmission processes of RLC layer for downlink packet data, such as dividing/combining, transmission process of RLC retransmission control and the like. Also, the RLC processing unit 2083 performs receiving process of RLC layer for uplink data, such as dividing/combining, receiving process of RLC retransmission control and the like.

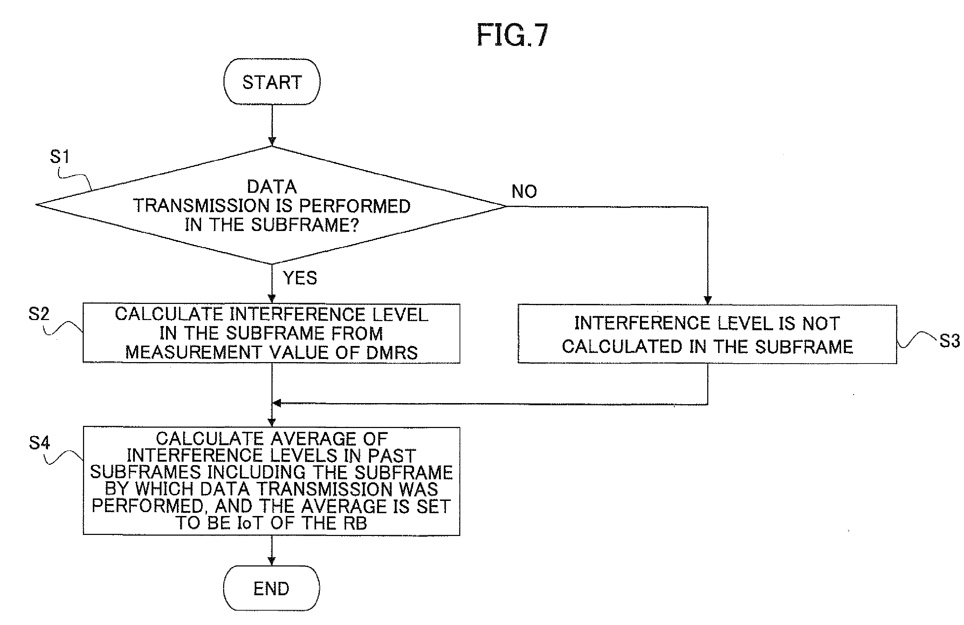

Next, a method for calculating IoT is described with reference to Fig.7 as a communication control method in the base station apparatus 200 of the present embodiment.

In each subframe, the baseband signal processing unit 208 determines whether data transmission is performed (step S1).

When data transmission is performed in a subframe (step S1: Yes), the interference measurement unit 2084 receives a measurement value of the DM RS (Demodulation Reference Signal) from the layer 1 processing unit 2081, and calculates interference level of the subframe (step S2). As the interference level (I), interference power ($I_D$) obtained from dispersion of the DM RS may be used as indicated in the equation (1). In addition, as indicated in the equation (2), as the interference level, a value obtained by subtracting signal power ($S_D$) of the DM RS on the RB from the received total RB power (RTRP) including thermal noise on the RB and noise of the receiver may be used.

On the other hand, when data transmission is not performed in the subframe (step S1 : No), the interference measurement unit 2084 does not calculate the interference level in the subframe (step S3).

The interference measurement unit 2084 calculates an average of interference levels in a plurality of past subframes, including the present subframe, by which data transmission has been performed, and calculates IoT of the RB according to the equation (3) (step S4).

The averaging period for obtaining $\widetilde{I}$ can be set as a parameter. In addition, the number of past subframes to be referred to is limited such that interference levels of subframes by which data transmission has been performed are used for averaging. For example, the interference measurement unit 2084 only refers to past 100 subframes, and, when data transmission has been performed in 90 subframes of the 100 subframes, the interference measurement unit 2084 averages interference levels of the 90 subframes.

The averaging may be equal averaging without weighting, or may be averaging with weighting such that the older the subframe is, the smaller the effect is.

In addition, an averaging value for a plurality of RBs may be used instead of averaging for one RB.

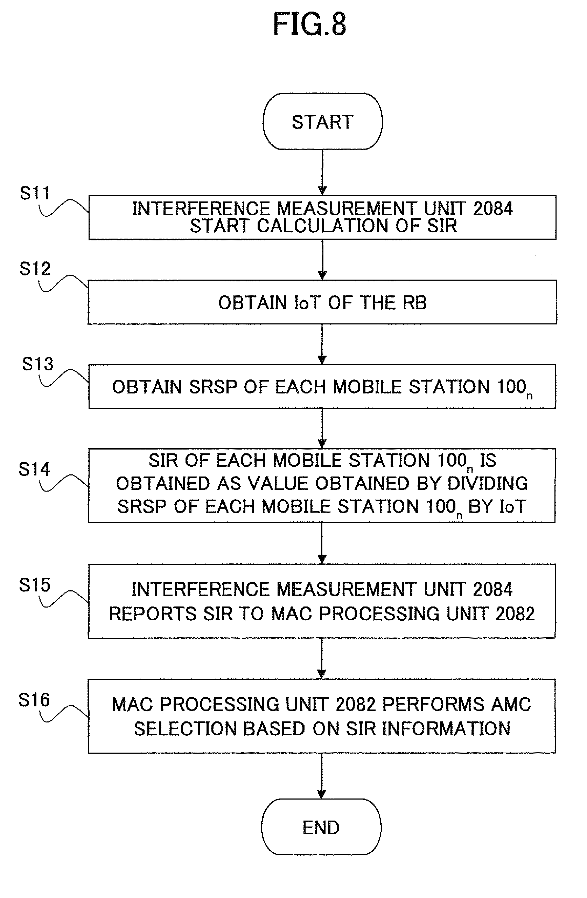

Next, with reference to Fig.8, a method for calculating SIR, and application of the SIR and the interference level to AMC, that is, use of the SIR and the interference level to transmission format setting are described as a communication control method in the base station apparatus 200 of the present embodiment.

The interference measurement unit 2084 calculates the SIR (step S11).

The interference measurement unit 2084 obtains IoT of the RB (step S12).

In addition, the interference measurement unit 2084 obtains signal power ($S_S$) of the sounding RS of each mobile station $100_n$ (step S13).

The interference measurement unit 2084 calculates SIR of each mobile station $100_n$ according to the equation (4) or (5) (step S14).

The interference measurement unit 2084 reports the IoT and the SIR to the layer 1 processing unit 2081 and the MAC processing unit 2082 (step S15).

The MAC processing unit 2082 performs AMC selection based on the IoT and the SIR (step S16). That is, the MAC processing unit 2082 determines a transmission format of the physical uplink shared channel as the third signal based on the interference wave level of the uplink, signal power of the sounding RS, power offset, and the transmission resources of the uplink. The power offset is determined by the signal power of the sounding RS and a predetermined threshold. The predetermined threshold is determined based on at least one of path loss and UE power Headroom. The UE Power Headroom is a ratio between the signal power of the sounding RS in the uplink and the maximum transmission power.

In the above example, each of the values of IoT, $\tilde{I}$, SIR and $S_S$ may be an instantaneous value or may be an average value or may be a value sampled at a predetermined sampling cycle. In addition, the value may be obtained by averaging the sampled values. In addition, the base station apparatus 200 is provided with a function for setting the averaging period for the averaging as a parameter.

While the present invention is described through the above examples, it should be understood that description and drawings as parts of this disclosure do not limit the present invention. Various alternative embodiments, examples and operational technologies are apparent to a person having ordinary skill in the art from the disclosure.

In other words, the present invention includes various other embodiments that are not described here. Therefore, the technical scope of the present invention should be understood by matters necessary to specify the invention according to the Claims in conjunction with the above examples.

While the present invention has been described separately as individual examples for simplicity of explanation, the individualities are not essential to the present invention, and one or more of the examples may be practiced when necessary. In addition, while the present invention has been described by using specific values in order to facilitate the understanding of the present invention, those values are merely examples and various values may be used unless otherwise noted.

While the present invention has been explained with reference to specific examples, each example is merely illustrative and a person having ordinary skill will understand various alterations, modifications, substitutions, replacements and the like. While the apparatuses according to the examples of the present invention are explained in the form of the operational block diagrams for simplicity of explanation, such apparatuses may be realized by hardware, software or a combination thereof. The present invention is not limited to the above examples, but includes various alterations, modifications, substitutions, replacements and the like without departing the scope of the present invention.

The present international application claims priority based on Japanese patent application No.2007-010860, filed in the JPO on January 19, 2007 and the entire contents of the Japanese patent application No.2007-010860 are incorporated herein by reference.

[Industrial Applicability]

The mobile communication system, the base station, the mobile station and the communication control method of the present invention can be applied to a radio communication system.

**Claims**

1. A base station apparatus performing communications with a plurality of mobile stations, comprising:

   a transmission resource assignment unit configured to assign uplink transmission resources to the mobile stations; and
   an interference wave level measurement unit configured to measure an uplink interference wave level based on a first signal transmitted based on the transmission resources by the mobile stations.

2. A base station apparatus performing communications with a plurality of mobile stations, wherein the mobile stations transmit a first signal using a first time slot, transmit a second signal using a second time slot, and transmit a third signal using the first time slot,

the base station apparatus comprising:

a transmission resource assignment unit configured to assign uplink transmission resources to the mobile stations;
an interference wave level measurement unit configured to measure an uplink interference wave level based on the first signal transmitted based on the transmission resources by the mobile stations;
a signal power measurement unit configured to measure second signal power based on the second signal; and
a transmission format determination unit configured to determine a transmission format of the third signal based on the uplink interference wave level, the second signal power, a power offset, and the uplink transmission resources.

3. The base station apparatus as claimed in claim 1 or 2, wherein the transmission resource assignment unit assigns, as the transmission resources, at least one of frequency resource, subframe and transmission power.

4. The base station apparatus as claimed in claim 2, wherein the interference wave level measurement unit measures the uplink interference wave level based on dispersion of the first signal.

5. The base station apparatus as claimed in claim 2, wherein the interference wave level measurement unit measures the uplink interference wave level based on a value obtained by subtracting signal power of the first signal from received total power.

6. The base station apparatus as claimed in any one of claims 1-5, wherein the interference wave level measurement unit averages the measured uplink interference wave levels for subframes to which the transmission resources have been assigned by the transmission resource assignment unit.

7. The base station apparatus as claimed in claim 2, wherein the transmission format is a modulation scheme and/or a data size.

8. The base station apparatus as claimed in claim 2, wherein the power offset is determined by the second signal power and a predetermined threshold, and the predetermined threshold is determined based on at least one of path loss and UE Power Headroom.

9. The base station apparatus as claimed in any one of claims 1-8, wherein the first signal is a demodulation reference signal and the second signal is a sounding reference signal, and the third signal is a physical uplink shared channel.

10. A communication control method in a base station apparatus performing communications with a plurality of mobile stations, wherein the mobile stations transmit a first signal using a first time slot, transmit a second signal using a second time slot, and transmit a third signal using the first time slot,
the communication control method comprising:

a first step of assigning uplink transmission resources to the mobile stations;
a second step of measuring an uplink interference wave level based on a first signal transmitted based on the transmission resources by the mobile stations;
a third step of measuring second signal power based on the second signal; and
a fourth step of determining a transmission format of the third signal based on the uplink interference wave level, the second signal power, a power offset, and the uplink transmission resources.

# FIG.1

# FIG.2

SOUNDING REFERENCE SIGNAL

DEMODULATION REFERENCE SIGNAL

DEMODULATION REFERENCE SIGNAL

TIME

LB1 | LB2 | LB3 | LB4 | LB5 | LB6 | LB7 | LB8 | LB9 | LB10 | LB11 | LB12 | LB13 | LB14

1 SLOT (= 0.5 msec)

1 SUBFRAME (= 1 msec)

# FIG.3

SOUNDING REFERENCE SIGNAL          DEMODULATION REFERENCE SIGNAL

TIME →

| LB1 | SB1 | LB2 | LB3 | LB4 | LB5 | SB2 | LB6 | LB7 | SB3 | LB8 | LB9 | LB10 | LB11 | SB4 | LB12 |

←————— 1 SLOT (= 0.5 msec) —————→

←——————————————————— 1 SUBFLAME (= 1 msec) ———————————————————→

EP 2 124 369 A1

# FIG.4

EP 2 124 369 A1

# FIG.5

208

BASEBAND SIGNAL
PROCESSING UNIT

INTERFERENCE
MEASUREMENT
UNIT — 2084

TO
TRANSMISSION
LINE
INTERFACE 212

RLC
PROCESSING
UNIT

2083

MAC
PROCESSING
UNIT — 2082

LAYER 1
PROCESSING UNIT

2081

TO TRANSMIT
AND RECEIVE
UNIT 206

CALL
PROCESSING
UNIT — 210

EP 2 124 369 A1

# FIG.6

# FIG.7

START

S1  DATA TRANSMISSION IS PERFORMED IN THE SUBFRAME?

NO

YES

S2  CALCULATE INTERFERENCE LEVEL IN THE SUBFRAME FROM MEASUREMENT VALUE OF DMRS

S3  INTERFERENCE LEVEL IS NOT CALCULATED IN THE SUBFRAME

S4  CALCULATE AVERAGE OF INTERFERENCE LEVELS IN PAST SUBFRAMES INCLUDING THE SUBFRAME BY WHICH DATA TRANSMISSION WAS PERFORMED, AND THE AVERAGE IS SET TO BE IoT OF THE RB

END

EP 2 124 369 A1

# FIG.8

START

S11 — INTERFERENCE MEASUREMENT UNIT 2084 START CALCULATION OF SIR

S12 — OBTAIN IoT OF THE RB

S13 — OBTAIN SRSP OF EACH MOBILE STATION $100_n$

S14 — SIR OF EACH MOBILE STATION $100_n$ IS OBTAINED AS VALUE OBTAINED BY DIVIDING SRSP OF EACH MOBILE STATION $100_n$ BY IoT

S15 — INTERFERENCE MEASUREMENT UNIT 2084 REPORTS SIR TO MAC PROCESSING UNIT 2082

S16 — MAC PROCESSING UNIT 2082 PERFORMS AMC SELECTION BASED ON SIR INFORMATION

END

| INTERNATIONAL SEARCH REPORT | International application No. |
|---|---|
| | PCT/JP2007/074964 |

**A. CLASSIFICATION OF SUBJECT MATTER**
*H04J11/00*(2006.01)i, *H04B7/26*(2006.01)i, *H04J1/00*(2006.01)i, *H04Q7/34*(2006.01)i, *H04Q7/36*(2006.01)i

According to International Patent Classification (IPC) or to both national classification and IPC

**B. FIELDS SEARCHED**

Minimum documentation searched (classification system followed by classification symbols)
H04J11/00, H04B7/26, H04J1/00, H04Q7/34, H04Q7/36

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | NTT DoCoMo, Fujitsu, NEC, Sharp, Toshiba Corporation, "Group-wised Frequency Resource Allocation for Frequency Domain Channel-dependent Scheduling in SC-Based E-UTRA Uplink", 3GPP TSG RAN WG1 LTE Ad Hoc, R1-061679, 3GPP, 2006.06, p.1-8 | 1-10 |
| A | "3rd Generation Partnership Project; Technical Specification Group Radio Access Network; LTE Physical Layer – General Description (Release 8)", 3GPP TS 36.201 v1.0.2, 3GPP Organizational Partners, 2007.05, p.1-12 | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 March, 2008 (31.03.08) | 08 April, 2008 (08.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/074964

C (Continuation).    DOCUMENTS CONSIDERED TO BE RELEVANT

| Category* | Citation of document, with indication, where appropriate, of the relevant passages | Relevant to claim No. |
|---|---|---|
| A | "3rd Generation Partnership Project; Technical Specification Group Radio Access Network; Physical Channels and Modulation (Release 8)", 3GPP TS 36.211 v.0.2.1, 3GPP Organizational Partners, 2006.11, p.1-24 | 1-10 |
| A | "3rd Generation Partnership Project; Technical Specification Group Radio Access Network; Physical layer procedures (Release 8)", 3GPP TS 36.213 v0.2.0, 3GPP Organizational Partners, 2006.10, p.1-16 | 1-10 |

Form PCT/ISA/210 (continuation of second sheet) (April 2007)

**EP 2 124 369 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007010860 A

### Non-patent literature cited in the description

- Physical Layer Aspects for Evolved UTRA. *3GPP TR 25.814 (V7.1.0),* September 2006
- Physical layer procedures. *3GPP TS 25.214 (V.7.3.0),* December 2006
- Physical layer - Measurements (FDD). *3GPP TS 25.215 (V.7.1.0),* September 2006